# EUROPÄISCHE PATENTSCHRIFT

(11) **EP 2 962 926 B1**
(45) Veröffentlichungstag und Bekanntmachung des Hinweises auf die Patenterteilung: **14.08.2019**
(21) Anmeldenummer: 15165416.7
(22) Anmeldetag: 28.04.2015
(51) Int. Cl.: B62K 11/00

(54) **ELEKTRISCH UND/ODER MIT MUSKELKRAFT BETREIBBARES FORTBEWEGUNGSMITTEL MIT VERBESSERTEM KALTSTARTVERHALTEN**
MEANS OF LOCOMOTION POWERED ELECTRICALLY AND/OR BY MUSCLE POWER COMPRISING AN IMPROVED COLD START METHOD
MOYEN DE DÉPLACEMENT ÉLECTRIQUE ET/OU ACTIONNÉ PAR LA FORCE DES MUSCLES, PRÉSENTANT UN COMPORTEMENT AMÉLIORÉ AU DÉMARRAGE À FROID

(30) Priorität: 02.07.2014 DE 102014212852
(43) Veröffentlichungstag der Anmeldung: 06.01.2016
(73) Patentinhaber: ROBERT BOSCH GMBH, 70442 Stuttgart (DE)
(72) Erfinder: Stegmaier, Juergen, 72074 Tuebingen (DE); Greiner, Rinaldo, 72762 Reutlingen (DE); Widmaier, Georg, 71296 Heimsheim (DE)

(56) Entgegenhaltungen:
- EP-A1- 1 903 670
- DE-A1-102012 224 071
- JP-A- 2004 362 949
- US-A- 4 280 581

## Beschreibung

### Stand der Technik

Die vorliegende Erfindung betrifft ein elektrisch und/oder mit Muskelkraft betreibbares Fortbewegungsmittel, insbesondere ein Elektrofahrrad oder einen Elektroscooter, mit einer verbesserten Robustheit gegenüber tiefen Temperaturen, insbesondere Temperaturen unterhalb 0°C.

Erfindungsgemäße elektrisch und/oder mit Muskelkraft betreibbare Fortbewegungsmittel erfreuen sich in Form von Elektrofahrrädern oder Elektroscootern in jüngster Zeit steigender Beliebtheit. Hierbei ist eine Antriebseinheit mit einem elektrischen Antrieb und einem Akkumulator zur Energieversorgung des elektrischen Antriebs vorgesehen. Eine Auslegung derartiger Antriebseinheiten ist üblicherweise in einem begrenzten Temperaturbereich, z.B. zwischen -10°C bis +40°C, vorgesehen. Beispielsweise bei Elektrofahrrädern oder Elektroscootern sind aus Kostengründen und zur Gewichtsreduzierung oft Kunststoffbauteile im elektrischen Antrieb verbaut. Bei zu tiefen Temperaturen besteht hierbei die Möglichkeit, dass einerseits mechanische Schäden an den Bauteilen des elektrischen Antriebs auftreten bzw. Bauteile wie Sensoren oder Steuerungselemente ausfallen. Beispielsweise besteht bei Kunststoffzahnrädern insbesondere die Gefahr, dass bei tiefen Temperaturen aufgrund hoher Sprödigkeit Zähne beschädigt werden bzw. abbrechen. Es wäre daher wünschenswert, dass derartige Fortbewegungsmittel auch bei tiefen Temperaturen uneingeschränkt einsatzbereit sind.

Dokument JP2004362949 offenbart die Präambel des Anspruchs 1.

### Offenbarung der Erfindung

Das erfindungsgemäße elektrisch und/oder mit Muskelkraft betreibbare Fahrzeug, insbesondere Elektrofahrrad oder Elektroscooter, mit den Merkmalen des Anspruchs 1 weist demgegenüber den Vorteil auf, dass eine Erwärmung einer Antriebseinheit, welche einen elektrischen Antrieb und einen Akkumulator zur Energieversorgung des elektrischen Antriebs umfasst, möglich ist. Hierbei umfasst das Fortbewegungsmittel eine Steuereinheit zur Steuerung der Antriebseinheit und wenigstens einen Temperatursensor zur Erfassung einer Temperatur wenigstens eines Teils der Antriebseinheit, insbesondere des Akkumulators. Die Temperatur kann dabei an einer Außenseite und/oder im Inneren der Antriebseinheit erfasst werden. Die Steuereinrichtung ist dabei eingerichtet, den elektrischen Antrieb, basierend auf einem Temperatursignal des Temperatursensors, derart anzusteuern, dass der elektrische Antrieb Wärme erzeugt, um den wenigstens einen Teil der Antriebseinheit, insbesondere den Akkumulator, zu erwärmen. Hierbei können erfindungsgemäß ausschließlich der elektrische Antrieb oder einzelne Teile davon oder ausschließlich der Akkumulator oder beide erwärmt werden. Somit wird erfindungsgemäß, basierend auf einer erfassten Temperatur an der Antriebseinheit, eine gezielte Erwärmung der Antriebseinheit erreicht, so dass auch ein gefahrloser und beschädigungsfreier Betrieb bei tiefen Temperaturen, insbesondere unter 0°C, möglich ist.

Die Unteransprüche zeigen bevorzugte Weiterbildungen der Erfindung.

Besonders bevorzugt ist der elektrische Antrieb derart ansteuerbar, dass der elektrische Antrieb Wärme erzeugt, ohne dass sich ein Rotor des elektrischen Antriebs dreht. Somit wird verhindert, dass bei zu tiefen Temperaturen durch Drehung des Rotors des elektrischen Antriebs und mit dem Rotor verbundener Bauteile eine Beschädigung dieser Bauteile erfolgt. Erfindungsgemäß kann somit die Steuereinrichtung eingerichtet sein, den elektrischen Antrieb so lange zur Erzeugung von Wärme anzusteuern, bis eine vorbestimmte Temperatur der Antriebseinheit erreicht ist, welche sicher einen beschädigungsfreien Betrieb des elektrischen Antriebs ermöglicht. Eine Temperaturgrenze kann beispielsweise 0°C sein.

Um möglichst viel Wärme zu erzeugen, wird der elektrische Antrieb vorzugsweise in einem suboptimalen Zustand betrieben, um Wärme zu erzeugen.

Gemäß einer weiteren bevorzugten Ausgestaltung der Erfindung wird der elektrische Antrieb während einer Fahrt des Fortbewegungsmittels in einem suboptimalen Zustand betrieben, um Wärme zu erzeugen. So kann beispielsweise bei einer Bergabfahrt bei tiefen Außentemperaturen, bei denen eine Abkühlung des elektrischen Antriebs durch den Fahrtwind auftreten könnte, der elektrische Antrieb betrieben werden, um Wärme zu erzeugen, um die Antriebseinheit auf einer vorbestimmten Temperatur zu halten. Bevorzugt umfasst der elektrische Antrieb ein Kunststoffbauteil, insbesondere ein Kunststoffzahnrad, welches mittels des elektrischen Antriebs erwärmbar ist.

Weiter bevorzugt ist die Steuereinheit eingerichtet, einen Start des elektrischen Antriebs zu verhindern, wenn eine Temperatur des elektrischen Antriebs unterhalb einer vorgegebenen Temperatur liegt.

Vorzugsweise umfasst der elektrische Antrieb wenigstens einen Sensor, wobei der Sensor derart im elektrischen Antrieb angeordnet ist, dass die durch den elektrischen Antrieb erzeugte Wärme unmittelbar den Sensor erwärmt.

Gemäß einer weiter bevorzugten Ausgestaltung der Erfindung ist der Akkumulator der Antriebseinheit derart am elektrischen Antrieb angeordnet, dass der Akkumulator mittels des elektrischen Antriebs erwärmbar ist. Hierdurch kann insbesondere eine Alterung von Zellen des Akkumulators verlangsamt werden. Auch kann eine Kapazität der Zellen des Akkumulators erhöht werden.

Gemäß einer weiteren bevorzugten Ausgestaltung der Erfindung umfasst das erfindungsgemäße Fortbewegungsmittel ferner eine Vielzahl von Temperatursensoren. Hierbei kann ein erster Temperatursensor eine Temperatur eines mechanischen Bauteils des elektrischen Antriebs, insbesondere eines Kunststoffbauteils, wie z.B. eines Kunststoffzahnrads, des elektrischen Antriebs erfassen. Ein zweiter Temperatursensor kann eine Temperatur eines elektronischen Bauteils, z.B. der Steuereinheit, des elektrischen Antriebs erfassen. Ein dritter Temperatursensor kann die Temperatur von weiteren Sensoren des elektrischen Antriebs, z.B. eines Drehzahlsensors und/oder eines Drehmomentsensors und/oder eines Neigungssensors, erfassen. Ein vierter Temperatursensor kann eine Temperatur eines Schmiermittels, z.B. von Fett oder anderen Schmierstoffen, erfassen. Hierbei sind beliebige Kombinationen der Temperatursensoren möglich.

Die Erfindung wird vorzugsweise bei Elektrofahrrädern oder Elektroscootern verwendet, um insbesondere eine Lebensdauer einer Antriebseinheit derartiger Fahrzeuge, insbesondere eines elektrischen Antriebs und/oder eines Akkumulators, zu verlängern.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Ansicht eines Elektrofahrrads gemäß einem Ausführungsbeispiel der Erfindung, und
- Figur 2: eine schematische Darstellung einer Antriebseinheit mit elektrischem Antrieb und einer Steuereinheit von Figur 1.

### Bevorzugte Ausführungsform der Erfindung

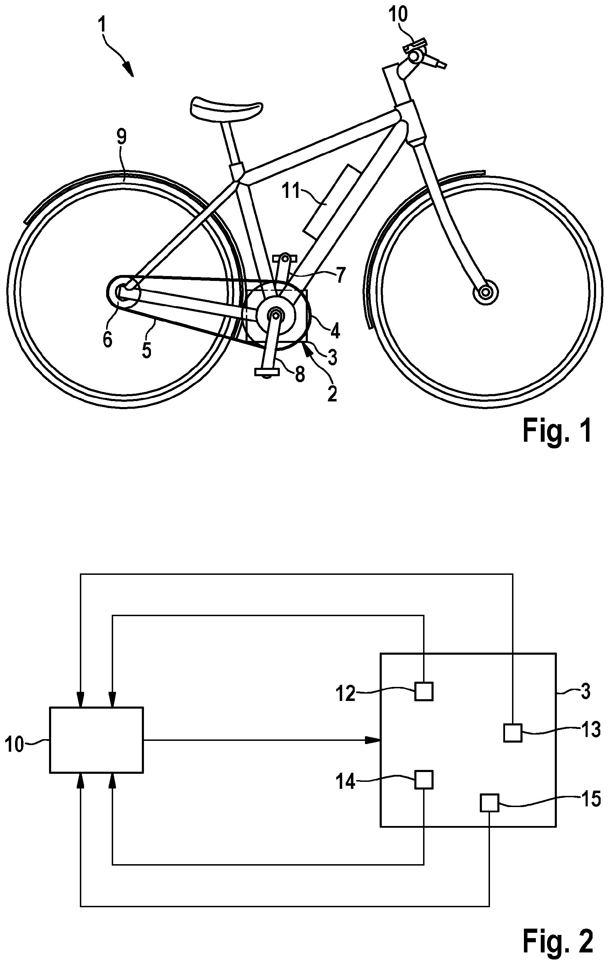

Nachfolgend wird unter Bezugnahme auf die Figuren 1 und 2 ein Elektrofahrrad 1 gemäß einem ersten bevorzugten Ausführungsbeispiel der Erfindung im Detail beschrieben.

Wie aus Figur 1 ersichtlich ist, umfasst das Elektrofahrrad 1 einen Kurbeltrieb 2 mit zwei Kurbeln 7, 8, an dem Pedale angeordnet sind. Ein elektrischer Antrieb 3 ist am Kurbeltrieb 2 angeordnet, so dass ein sogenanntes Mittelmotorkonzept des Elektrofahrrads vorliegt. An einem Hinterrad 9 sind ein oder mehrere Ritzel 6 angeordnet.

Ein Antriebsmoment, welches durch einen Fahrer und/oder durch den elektrischen Antrieb 3 bereitgestellt wird, wird von einem Kettenblatt 4 am Kurbeltrieb 2 über eine Kette 5 auf die Ritzel 6 übertragen.

An einem Lenker des Fahrrads ist ferner eine Steuereinheit 10 angeordnet, welche mit dem elektrischen Antrieb 3 verbunden ist. Ein Akkumulator 11 dient zur Versorgung des elektrischen Antriebs mit elektrischer Energie.

Eine Antriebseinheit des Elektrofahrrads umfasst erfindungsgemäß den elektrischen Antrieb 3 sowie den Akkumulator 11.

Weiterhin ist erfindungsgemäß wenigstens ein Temperatursensor am elektrischen Antrieb 3 angeordnet. Figur 2 zeigt schematisch eine Anordnung mehrerer Temperatursensoren am elektrischen Antrieb 3. Hierbei ist ein erster Temperatursensor 12 zur Erfassung einer Temperatur eines mechanischen Bauteils, beispielsweise eines Kunststoffzahnrads oder eines anderen Kunststoffbauteils, vorgesehen. Ein zweiter Temperatursensor 13 ist zur Erfassung einer Temperatur eines elektronischen Bauteils, z.B. eines Schaltkreises oder dergleichen, vorgesehen. Ein dritter Temperatursensor 14 ist zur Erfassung einer Temperatur eines weiteren Sensors vorgesehen. Weitere Sensoren sind beispielsweise ein Drehzahlsensor, ein Drehmomentsensor und/oder Neigungssensor, welche am elektrischen Antrieb 3 angeordnet sein können. Ein vierter Temperatursensor 15 ist zur Erfassung einer Temperatur eines Schmiermittels vorgesehen.

Die Steuereinheit 10 ist nun eingerichtet, basierend auf wenigstens einem Temperatursignal eines der Temperatursensoren, vorzugsweise basierend auf mehreren Temperatursignalen bzw. allen Temperatursignalen, den elektrischen Antrieb 3 derart anzusteuern, dass der elektrische Antrieb 3 Wärme erzeugt, um den elektrischen Antrieb 3 bzw. dessen Bauteile zu erwärmen, wenn wenigstens eine der erfassten Temperaturen unterhalb des vorbestimmten Wertes liegt.

Die Erwärmung mittels des elektrischen Antriebs 3 erfolgt dabei so lange, bis der und/oder die Temperatursensor(en) jeweils den vorbestimmten Temperaturschwellenwert erreichen, bei dem eine Schädigung von Bauteilen des elektrischen Antriebs ausgeschlossen ist.

Hierbei kann die Steuereinheit 10 den elektrischen Antrieb 3 derart ansteuern, dass eine Rotation von rotierenden Bauteilen des elektrischen Antriebs 3 vermieden wird, so dass eine Wärmeerzeugung durch den elektrischen Antrieb 3 im Stand des Elektrofahrrads möglich.

Wenn das Elektrofahrrad ein sogenanntes Pedelec ist, bei dem der elektrische Antrieb nur dann Leistung abgibt, wenn auch ein Fahrrad die Pedale betätigt, kann die Steuereinheit 10 derart eingerichtet sein, dass bis zum Erreichen eines vorbestimmten Temperaturschwellenwerts der elektrische Antrieb 3 keine Leistung zusätzlich zur vom Fahrer aufgebrachten Leistung abgibt, bis die gewünschte Temperatur am elektrischen Antrieb 3 erreicht ist.

Erfindungsgemäß kann somit ein Temperatureinsatzbereich von elektrisch und/oder mit Muskelkraft betreibbaren Fortbewegungsmitteln ausgedehnt werden. Weiterhin kann erfindungsgemäß erreicht werden, dass eine Qualität von Sensorsignalen von verschiedensten Sensoren stabil gehalten werden bzw. verbessert werden, falls tiefe Temperaturen vorhanden sind. Auch kann beispielsweise durch Erwärmung von Schmierstoffen ein verbessertes Schmierverhalten des elektrischen Antriebs und dessen mechanischer Bauteile erreicht werden, so dass eine geringere Abnutzung und somit eine längere Lebensdauer des elektrischen Antriebs ermöglicht wird.

Es sei angemerkt, dass der Akkumulator 11 auch in der Nähe des elektrischen Antriebs 3 angeordnet werden kann, so dass eine Alterung von Zellen des Akkumulators verlangsamt werden kann bzw. eine Kapazität der Zellen des Akkumulators erhöht werden kann, wenn auch der Akkumulator mittels der vom elektrischen Antrieb erzeugten Wärme erwärmt wird.

Erfindungsgemäß wird somit eine Ansteuerung des elektrischen Antriebs mittels der Steuereinheit 10 in Abhängigkeit einer Temperatur der Antriebseinheit bzw. des elektrischen Antriebs vorgenommen. Dabei kann die Steuereinheit den elektrischen Antrieb 3 in unterschiedlichen Wirkungsgradbereichen betreiben, so dass eine Verlustleistung in unterschiedliche Wärmemengen umgewandelt werden kann. Da der elektrische Antrieb 3 in einem geschlossenen Gehäuse angeordnet ist, kann eine Erwärmung der Bauteile und Schmierstoffe oder dergleichen in relativ kurzer Zeit erfolgen.

Somit widerspricht die Steuerung durch die Steuereinheit 10 bei der vorliegenden Erfindung eigentlich der üblichen Steuerung von Elektrofahrrädern oder dergleichen, welche in der Regel mittels Wirkungsgrad-optimalen Ansteuerungsverfahren gesteuert werden.

## Patentansprüche

1. Elektrisch und/oder mit Muskelkraft betreibbares Fortbewegungsmittel, insbesondere Elektrofahrrad oder Elektroscooter, umfassend
- eine Antriebseinheit mit einem elektrischen Antrieb (3) und einem Akkumulator (11),
- eine Steuereinheit (10) zur Steuerung der Antriebseinheit, und
- wenigstens einen Temperatursensor (12, 13, 14, 15) zur Erfassung einer Temperatur des Antriebs,
**dadurch gekennzeichnet, dass** die Steuereinheit (10) eingerichtet ist,
- basierend auf einem Temperatursignal des Temperatursensors (12, 13, 14, 15), den elektrischen Antrieb (3) derart anzusteuern, dass der elektrische Antrieb (3) Wärme erzeugt, um die Antriebseinheit zu erwärmen, wenn wenigstens eine der erfassten Temperaturen unterhalb eines vorbestimmten Wertes liegt, und
- den elektrischen Antrieb (3) zur Erzeugung der Erwärmung des elektrischen Antriebs (3) so lange anzusteuern, bis ein vorbestimmter Temperaturschwellenwert erreicht wird, bei dem eine Schädigung von Bauteilen des elektrischen Antriebs ausgeschlossen ist.

2. Fortbewegungsmittel nach Anspruch 1, **dadurch gekennzeichnet, dass** der elektrische Antrieb (3) derart ansteuerbar ist, dass der elektrische Antrieb (3) Wärme erzeugt, ohne dass sich ein Rotor des elektrischen Antriebs (3) dreht.

3. Fortbewegungsmittel nach einem der vorhergehenden Ansprüche, **dadurch gekennzeichnet, dass** die Steuereinheit (10) eingerichtet ist, den elektrischen Antrieb (3) in einem suboptimalen Zustand zu betreiben, um Wärme zu erzeugen.

4. Fortbewegungsmittel nach einem der vorhergehenden Ansprüche, **dadurch gekennzeichnet, dass** die Steuereinheit (10) eingerichtet ist, den elektrischen Antrieb (3) während einer Fahrt des Fortbewegungsmittels in einem suboptimalen Zustand zu betreiben, um Wärme zu erzeugen.

5. Fortbewegungsmittel nach einem der vorhergehenden Ansprüche, **dadurch gekennzeichnet, dass** der elektrische Antrieb (3) wenigstens ein Kunststoffbauteil, insbesondere ein Kunststoffzahnrad, umfasst, welches mittels des elektrischen Antriebs erwärmbar ist.

6. Fortbewegungsmittel nach einem der vorhergehenden Ansprüche, **dadurch gekennzeichnet, dass** die Steuereinheit (10) eingerichtet ist, eine Abgabe von Drehmoment durch den elektrischen Antrieb (3) zu verhindern, wenn eine Temperatur des elektrischen Antriebs (3) unterhalb einer vorgegebenen Temperatur liegt.

7. Fortbewegungsmittel nach einem der vorhergehenden Ansprüche, **dadurch gekennzeichnet, dass** der elektrische Antrieb (3) wenigstens einen Sensor, insbesondere einen Drehzahlsensor und/oder einen Drehmomentsensor und/oder einen Neigungssensor, umfasst, wobei der Sensor im elektrischen Antrieb (3) derart angeordnet ist, dass die durch den elektrischen Antrieb (3) erzeugte Wärme unmittelbar den Sensor erwärmt.

8. Fortbewegungsmittel nach einem der vorhergehenden Ansprüche, **dadurch gekennzeichnet, dass** der Akkumulator (11) mittels des elektrischen Antriebs (3) erwärmbar ist.

9. Fortbewegungsmittel nach einem der vorhergehenden Ansprüche, **gekennzeichnet durch** eine Vielzahl von Temperatursensoren,
- insbesondere einen ersten Temperatursensor (12) zur Erfassung einer Temperatur eines mechanischen Bauteils des elektrischen Antriebs, und/oder
- insbesondere einen zweiten Temperatursensor (13) zur Erfassung einer Temperatur eines elektronischen Bauteils des elektrischen Antriebs und/oder
- insbesondere einen dritten Temperatursensor zur Erfassung einer Temperatur eines weiteren Sensors, insbesondere eines Drehzahlsensors und/oder eines Drehmomentsensors und/oder
- insbesondere eines Neigungssensors, und/oder einen vierten Temperatursensor (15) zur Erfassung einer Temperatur eines Schmiermittels des elektrischen Antriebs.

10. Fortbewegungsmittel nach einem der vorhergehenden Ansprüche, **dadurch gekennzeichnet, dass** die Steuereinheit (10) eingerichtet ist, den elektrischen Antrieb (3) in unterschiedlichen Wirkungsgradbereichen zu betreiben, um eine Abgabe von unterschiedlichen Wärmemengen durch den elektrischen Antrieb zu erreichen.

## Claims

1. Means of locomotion that can be powered electrically and/or by muscle power, in particular electric bicycle or electric scooter, comprising
- a drive unit having an electric drive (3) and a battery (11),
- a control unit (10) for controlling the drive unit, and
- at least one temperature sensor (12, 13, 14, 15) for measuring a temperature of the drive,
**characterized in that** the control unit (10) is configured
- to activate the electric drive (3) on the basis of a temperature signal from the temperature sensor (12, 13, 14, 15) in such a way that the electric drive (3) generates heat in order to heat the drive unit when at least one of the measured temperatures lies below a predetermined value, and
- to activate the electric drive (3) to generate the heating of the electric drive (3) until a predetermined temperature threshold value is reached, at which damage to components of the electric drive is ruled out.

2. Means of locomotion according to Claim 1, **characterized in that** the electric drive (3) can be activated in such a way that the electric drive (3) generates heat without a rotor of the electric drive (3) rotating.

3. Means of locomotion according to one of the preceding claims, **characterized in that** the control unit (10) is configured to operate the electric drive (3) in a sub-optimal state in order to generate heat.

4. Means of locomotion according to one of the preceding claims, **characterized in that** the control unit (10) is configured to operate the electric drive (3) in a sub-optimal state during travel of the means of locomotion in order to generate heat.

5. Means of locomotion according to one of the preceding claims, **characterized in that** the electric drive (3) comprises at least one plastic component, in particular a plastic gear wheel, which can be heated by means of the electric drive.

6. Means of locomotion according to one of the preceding claims, **characterized in that** the control unit (10) is configured to prevent an output of torque by the electric drive (3) when a temperature of the electric drive (3) lies below a predefined temperature.

7. Means of locomotion according to one of the preceding claims, **characterized in that** the electric drive (3) comprises at least one sensor, in particular a rotational speed sensor and/or a torque sensor and/or an inclination sensor, wherein the sensor is arranged in the electric drive (3) in such a way that the heat generated by the electric drive (3) heats the sensor directly.

8. Means of locomotion according to one of the preceding claims, **characterized in that** the battery (11) can be heated by means of the electric drive (3).

9. Means of locomotion according to one of the preceding claims, **characterized by** a multiplicity of temperature sensors,
- in particular a first temperature sensor (12) for measuring a temperature of a mechanical component of the electric drive, and/or
- in particular a second temperature sensor (13) for measuring a temperature of an electronic component of the electric drive, and/or
- in particular a third temperature sensor for measuring a temperature of a further sensor, in particular a rotational speed sensor and/or a torque sensor and/or
- in particular an inclination sensor, and/or a fourth temperature sensor (15) for measuring a temperature of a lubricant of the electric drive.

10. Means of locomotion according to one of the preceding claims, **characterized in that** the control unit (10) is configured to operate the electric drive (3) in different efficiency ranges, in order to achieve an output of different quantities of heat by the electric drive.

## Revendications

1. Moyen de locomotion à fonctionnement électrique et/ou par force musculaire, notamment un vélo électrique ou un scooter électrique, ledit moyen de locomotion comprenant
- une unité d'entraînement pourvue d'un entraînement électrique (3) et un accumulateur (11),
- une unité de commande (10) destinée à commander l'unité d'entraînement et
- au moins un capteur de température (12, 13, 14, 15) destiné à détecter une température de l'entraînement,
**caractérisé en ce que** l'unité de commande (10) est adaptée,
- pour commander l'entraînement électrique (3) sur la base d'un signal de température du capteur de température (12, 13, 14, 15) de telle sorte que l'entraînement électrique (3) génère de la chaleur pour chauffer l'unité d'entraînement si au moins une des températures détectées est inférieure à une valeur prédéterminée, et
- pour commander l'entraînement électrique (3) afin de générer le chauffage de l'entraînement électrique (3) jusqu'à atteindre un seuil de température prédéterminé, pour lequel un endommagement des composants de l'entraînement électrique est exclu.

2. Moyen de locomotion selon la revendication 1, **caractérisé en ce que** l'entraînement électrique (3) peut être commandé de telle sorte que l'entraînement électrique (3) génère de la chaleur sans qu'un rotor de l'entraînement électrique (3) ne tourne.

3. Moyen de locomotion selon l'une des revendications précédentes, **caractérisé en ce que** l'unité de commande (10) est adaptée pour faire fonctionner l'entraînement électrique (3) dans un état sous-optimal afin de générer de la chaleur.

4. Moyen de locomotion selon l'une des revendications précédentes, **caractérisé en ce que** l'unité de commande (10) est adaptée pour faire fonctionner l'entraînement électrique (3) pendant un déplacement du moyen de locomotion dans un état sous-optimal afin de générer de la chaleur.

5. Moyen de locomotion selon l'une des revendications précédentes, **caractérisé en ce que** l'entraînement électrique (3) comprend au moins un composant en matière plastique, en particulier une roue dentée en matière plastique, qui peut être chauffée à l'aide de l'entraînement électrique.

6. Moyen de locomotion selon l'une des revendications précédentes, **caractérisé en ce que** l'unité de commande (10) est adaptée pour empêcher l'entraînement électrique (3) de délivrer un couple lorsqu'une température de l'entraînement électrique (3) est inférieure à une température prédéterminée.

7. Moyen de locomotion selon l'une des revendications précédentes, **caractérisé en ce que** l'entraînement électrique (3) comprend au moins un capteur, notamment un capteur de vitesse de rotation et/ou un capteur de couple et/ou un capteur d'inclinaison, le capteur étant disposé dans l'entraînement électrique (3) de telle sorte que la chaleur générée par l'entraînement électrique (3) chauffe directement le capteur.

8. Moyen de locomotion selon l'une des revendications précédentes, **caractérisé en ce que** l'accumulateur (11) peut être chauffé à l'aide de l'entraînement électrique (3) .

9. Moyen de locomotion selon l'une des revendications précédentes, **caractérisé par** une pluralité de capteurs de température,
- notamment un premier capteur de température (12) destiné à détecter une température d'un composant mécanique de l'entraînement électrique, et/ou
- notamment un deuxième capteur de température (13) destiné à détecter une température d'un composant électronique de l'entraînement électrique et/ou
- en particulier un troisième capteur de température destiné à détecter une température d'un capteur supplémentaire, notamment d'un capteur de vitesse de rotation et/ou d'un capteur de couple et/ou notamment d'un capteur d'inclinaison, et/ou un quatrième capteur de température (15) destiné à détecter une température d'un lubrifiant de l'entraînement électrique.

10. Moyen de locomotion selon l'une des revendications précédentes, **caractérisé en ce que** l'unité de commande (10) est adaptée pour faire fonctionner l'entraînement électrique (3) dans différentes gammes de rendement de manière à ce que l'entraînement électrique délivre différentes quantités de chaleur.
